# EUROPEAN PATENT APPLICATION

(11) **EP 2 063 089 A2**
(43) Date of publication of application: **27.05.2009**
(21) Application number: 08020256.7
(22) Date of filing: 20.11.2008
(51) Int. Cl.: F02D 41/02

(54) **Particulate matter trap filter regeneration temperature control for internal combustion engine**

(30) Priority: 22.11.2007 JP 2007302828; 10.10.2008 JP 2008264214
(71) Applicant: Nissan Motor Co., Ltd., Kanagawa 221-0023 (JP)
(72) Inventor: Nishizawa, Toru, Atsugi-shi Kanagawa 243-0123 (JP); Kaneko, Hiroaki, Atsugi-shi Kanagawa 243-0123 (JP); Onodera, Hitoshi, Atsugi-shi Kanagawa 243-0123 (JP)
(74) Representative: Grünecker, Kinkeldey, Stockmair & Schwanhäusser Anwaltssozietät

(57) **Abstract**

An internal combustion engine (1) comprises a fuel injector (9), a filter (13) which traps particulate matter in exhaust gas, and a catalyst (14) which oxidizes unburnt fuel or carbon monoxide in the exhaust gas on the upstream side of the filter (13). When regeneration of the filter (13) is required, a controller (21) determines a post-injection fuel injection timing and a post-injection fuel injection amount of the fuel injector (9) on the basis of an upstream exhaust gas temperature (*Texh*) and a catalyst temperature (*Tcat*) (S16, S17, S19, S20, S22, S23, S25, S26, S28), thereby optimizing the regeneration temperature condition of the filter (13).

## Description

### FIELD OF THE INVENTION

This invention relates to regeneration temperature control of a particulate matter trap filter that traps particulate matter in the exhaust gas of a diesel engine.

### BACKGROUND OF THE INVENTION

JP2003-336520A, published by the Japan Patent Office in 2003, discloses a regeneration method for a particulate matter trap filter that traps particulate matter discharged from a diesel engine.

The prior art increases unburnt fuel, which is mainly constituted by hydrocarbon (HC), and carbon monoxide (CO) in the exhaust gas when filter regeneration is required, by causing fuel injectors to perform a post-injection fuel injection in an expansion stroke or an exhaust stroke after a main injection. An oxidation catalyst or a three-way catalyst is installed in an exhaust passage of the diesel engine on the upstream side of the particulate matter trap filter so as to promote oxidation of the unburnt fuel and carbon monoxide.

Oxidation heat that is generated accompanying oxidation of the unburnt fuel or carbon monoxide causes the exhaust gas temperature to rise, and resultantly causes the temperature of the particulate matter trap filter located downstream to rise. As the filter temperature rises, the particulate matter deposited on the filter burns. By burning the particulate matter deposited on the filter, the filter is regenerated so that it can trap particulate matter again.

### SUMMARY OF THE INVENTION

Since a diesel engine operates by burning a fuel with excess air, the exhaust gas temperature tends to be lower than that of a spark ignition internal combustion engine, which operates by burning a fuel with a stoichiometric amount of air in most cases. On the other hand, it is necessary to raise the temperature of the particulate matter trap filter to a temperature at which particulate matter burns in order to burn the particulate matter deposited on the filter. The catalyst is disposed on the upstream side of the filter so as to generate oxidation heat by oxidizing unburnt fuel and carbon monoxide.

According to experiments performed by the inventors, the post-injection fuel injection must be controlled such that a temperature of exhaust gas on the upstream side of the particulate matter trap filter and a temperature of the catalyst itself are kept in preferable temperature regions, respectively, so as to regenerate the filter appropriately.

When there is a change in the fuel injection characteristics of a fuel injector due to temporal degradation thereof, or when an error occurs during crank angle detection due to temporal degradation of a crank angle sensor, an actual post-injection fuel injection timing may deviate from an optimum post-injection fuel injection timing or an actual post-injection fuel injection amount may deviate from an optimum fuel injection amount. Temporal degradation of the fuel injector or the crank angle sensor may make filter regeneration difficult or adversely affect the fuel consumption of the engine due to an excessive post-injection fuel injection amount.

Is it therefore an object of this invention to control the exhaust gas temperature upstream of the catalyst and the catalyst temperature to optimum temperatures for filter regeneration even when an error occurs in the post-injection fuel injection timing or the post-injection fuel injection amount due to temporal degradation of a fuel injector or a crank angle sensor.

To achieve the above object, this invention provides a filter regeneration temperature control device for such an internal combustion engine that comprises a fuel injector, an exhaust passage, a filter which traps particulate matter in exhaust gas in the exhaust passage, and a catalyst which promotes oxidation of unburnt fuel or carbon monoxide in the exhaust gas in the exhaust passage upstream of the filter. The device comprises a sensor which detects an upstream exhaust gas temperature in the exhaust passage upstream of the catalyst, a sensor which detects any one of a downstream exhaust gas temperature in the exhaust passage downstream of the catalyst and a temperature of the filter, as a catalyst temperature of the catalyst, and a programmable controller programmed to control the fuel injector. The controller is programmed to determine if regeneration of the filter is required, determine a post-injection fuel injection timing and a post-injection fuel injection amount on the basis of the upstream exhaust gas temperature and the catalyst temperature when regeneration of the filter is required, and control the fuel injector to perform a post-injection fuel injection corresponding to the post-injection fuel injection timing and the post-injection fuel injection amount.

This invention also provides a filter regeneration temperature control method for the above-described internal combustion engine. The method comprises detecting an upstream exhaust gas temperature in the exhaust passage upstream of the catalyst, detecting a catalyst temperature of the catalyst, determining if regeneration of the filter is required, determining a post-injection fuel injection timing and a post-injection fuel injection amount on the basis of the upstream exhaust gas temperature and the catalyst temperature when regeneration of the filter is required, and controlling the fuel injector to perform a post-injection fuel injection corresponding to the post-injection fuel injection timing and the post-injection fuel injection amount.

The details as well as other features and advantages of this invention are set forth in the remainder of the specification and are shown in the accompanying drawings.

### BRIEF DESCRIPTION OF THE DRAWINGS

FIG. 1 is a schematic diagram of a diesel engine to which this invention is applied.

FIGs. 2A-2C are diagrams showing variations in an upstream exhaust gas temperature on an upstream side of a catalyst, a catalyst temperature, and an oil dilution ratio with respect to a post-injection fuel injection timing, according to this invention.

FIG. 3 is a diagram describing a control algorithm of a filter regeneration temperature control device according to this invention.

FIGs. 4A and 4B are a flowchart describing a filter regeneration routine performed by a controller according to this invention.

FIG. 5 is a controller diagram showing the characteristics of a basic post-injection fuel injection amount map stored by the controller.

FIG. 6 is a diagram showing the characteristics of a basic post-injection fuel injection timing map stored by the controller.

FIG. 7 is a diagram showing the characteristics of a target intake air amount map stored by the controller.

### DESCRIPTION OF THE PREFERRED EMBODIMENTS

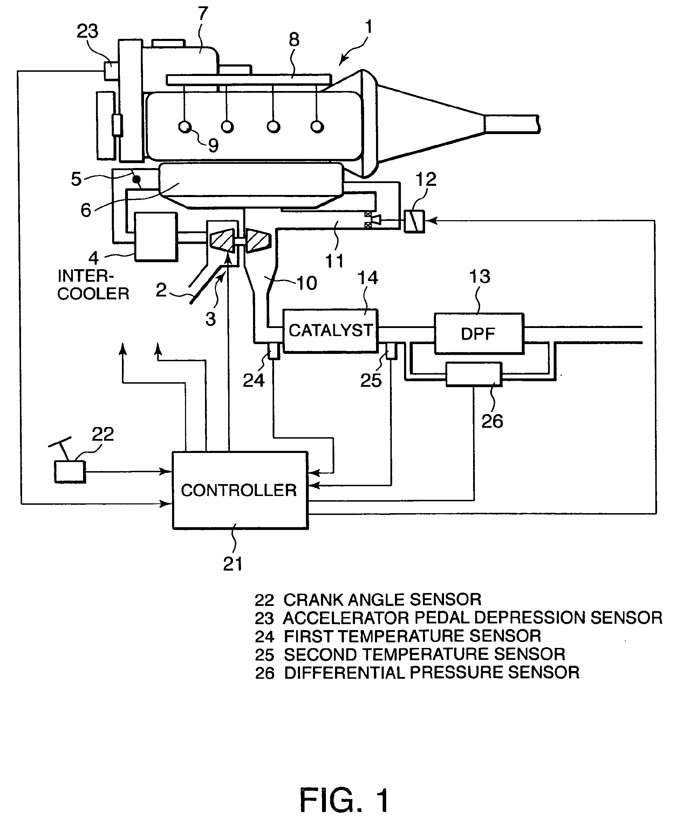

Referring to FIG. 1 of the drawings, a multi-cylinder diesel engine 1 for a vehicle comprises an intake passage 2 in which a compressor of a variable nozzle turbocharger 3, an inter-cooler 4, and an intake throttle 5 are installed. Intake air of the diesel engine 1 is turbocharged by the compressor of the turbocharger 3, cooled by the inter-cooler 4, and, after being subjected to flow rate regulation by the intake throttle 5, supplied to a combustion chamber formed in each cylinder of the diesel engine 1 via an intake collector 6.

The diesel engine 1 comprises a common-rail type fuel injection device. The common-rail type fuel injection device comprises a high-pressure fuel pump 7, a common-rail 8, and a fuel injector 9 disposed in each cylinder. The high-pressure fuel pump 7 pressurizes fuel and supplies it to the common-rail 8, and the fuel injector 9 injects the fuel stored in the common-rail 8 directly into the combustion chamber in each cylinder.

An air-fuel mixture, being a mixture of the air aspirated into the combustion chamber and the fuel injected by the fuel injector 9, is ignited by compression ignition in a compression stroke of a piston which reciprocates in the cylinder, and burns in the combustion chamber. Exhaust gas generated by combustion of the air-fuel mixture is discharged into an exhaust passage 10.

A part of the exhaust gas thus discharged into the exhaust passage 10 flows into an exhaust gas recirculation (EGR) passage 11, and is recirculated into the intake collector 6 via an EGR valve 12 disposed in the EGR passage 11. The other part of the exhaust gas is discharged into the atmosphere through a catalyst 14 and a diesel particulate filter (DPF) 13 after driving a turbine of the turbocharger 3.

The DPF 13 is a known particulate matter trap filter which traps particulate matter contained in the exhaust gas of a diesel engine. The DPF 13 cannot trap particulate matter beyond a predetermined amount. It is necessary to remove the particulate matter deposited on the DPF 13 by causing it to burn when a deposit amount of the particulate matter reaches the predetermined amount. This operation is referred to as regeneration of the DPF 13.

When performing regeneration of the DPF 13, therefore, it is necessary to raise the temperature of the DPF 13 to a combustion temperature of the particulate matter.

The catalyst 14 is constituted by an oxidation catalyst made from a noble metal such as platinum. The catalyst 14 functions to generate oxidation heat by promoting oxidation of unburnt fuel, which is mainly constituted by hydrocarbon (HC), and carbon monoxide (CO) in the exhaust gas. The oxidation heat thus generated increases the temperature of exhaust gas, and hence, a high-temperature exhaust gas is supplied to the DPF 13 so as to raise the temperature of DPF 13 to the combustion temperature of the particulate matter, thereby burning the particulate matter deposited in the DPF 13. Instead of providing the catalyst 14 on the upstream side of the DPF 13, it is possible to coat the DPF 13 with a catalytic material. It is also possible to constitute the catalyst 14 by a three-way catalyst, which is known to have an oxidizing function.

To regenerate the DPF 13, therefore, it is necessary to increase the amount of unburnt fuel and carbon monoxide in the exhaust gas. This requirement is fulfilled by causing the fuel injectors 9 to perform a post-injection fuel injection in an expansion stroke or an exhaust stroke of the piston after performing a main fuel injection for combustion.

Further, for successful regeneration of the DPF 13, it is necessary to control the post-injection fuel injection such that the exhaust gas temperature on the upstream side of the catalyst 14 (hereinafter referred to as an upstream exhaust gas temperature) and the temperature of the catalyst 14 itself (hereinafter referred to as a catalyst temperature) are raised to predetermined temperatures, respectively.

The filter regeneration temperature control device according to this invention comprises a programmable controller 21 for controlling a post-injection fuel injection timing and a post-injection fuel injection amount of the fuel injectors 9. The controller 21 is constituted by a microcomputer comprising a central processing unit (CPU), a read-only memory (ROM), a random access memory (RAM), and an input/output interface (I/O interface). The controller may be constituted by a plurality of microcomputers.

The filter regeneration temperature control device further comprises a crank angle sensor 23 which detects an engine rotation speed of the diesel engine 1 and an accelerator pedal depression sensor 22 which detects an engine load of the diesel engine 1. Detection data from these sensors 22, 23 are input into the controller 21 via a signal circuit.

The controller 21 also functions as an engine controller for controlling the main fuel injection of the fuel injectors 9, as well as an intake air amount and an EGR rate of the diesel engine 1. For these purposes, the controller 21 calculates a main fuel injection amount and a main fuel injection timing on the basis of the engine load and the engine rotation speed, and outputs a corresponding pulse width signal to the fuel injectors 9 at a calculated main fuel injection timing. The controller 21 controls the intake air amount by regulating the opening of the intake throttle 5. The controller controls the EGR rate by regulating the opening of the EGR valve 12.

Next, control of the post-injection fuel injection performed by the controller 21 for regeneration of the DPF 13 will be described.

When the particulate matter deposit amount in the DPF 13 has reached a predetermined threshold value, the controller 21 increases a proportion of unburnt fuel and carbon monoxide in the exhaust gas by performing a post-injection fuel injection in the expansion stroke or the exhaust stroke of each piston immediately after the main injection. The unburnt fuel and carbon monoxide in the exhaust gas are oxidized in the catalyst 14 and oxidation heat generated thereby raises the exhaust gas temperature. A resultant high-temperature exhaust gas flows into the DPF 13, thereby raising the filter temperature. An increase in the filter temperature causes the particulate matter deposited in the DPF 13 to burn, thereby regenerating the DPF 13.

A determination as to whether or not the deposit amount of particulate matter in the DPF 13 has reached the predetermined threshold amount is made on the basis of a differential pressure ΔP between the upstream and downstream sides of the DPF 13. For this purpose, the filter regeneration temperature control device further comprises a differential pressure sensor 26 which detects the differential pressure ΔP between the upstream and downstream sides of the DPF 13. The differential pressure ΔP detected by the differential pressure sensor 26 is input into the controller 21 via a signal circuit.

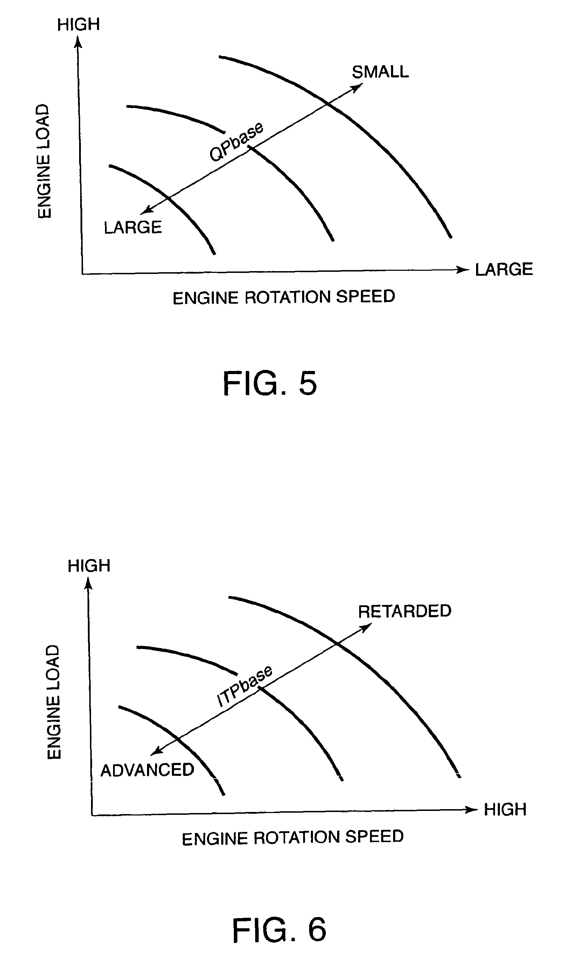

In the ROM of the controller 21, maps which define a basic post-injection fuel injection amount *QPbase* and a basic post-injection fuel injection timing *ITPbase* according to the engine load and the engine rotation speed are stored in advance. The maps have characteristics as shown in FIGs. 5 and 6. When regeneration of the DPF 13 is required, the controller 21 determines the basic post-injection fuel injection amount *QPbase* and the basic post-injection fuel injection timing *ITPbase* from the engine load and the engine rotation speed by referring to these maps. The controller 21 causes the fuel injectors 9 to perform a post-injection fuel injection according to the basic post-injection fuel injection amount *QPbase* and the basic post-injection fuel injection timing *ITPbase* thus determined.

The falter regeneration temperature control device has target values with respect to the upstream exhaust gas temperature and the catalyst temperature when regeneration the DPF 13 is underway. Specifically, the upstream exhaust gas temperature is set at 650 degrees centigrade (650°C) and the target catalyst temperature is set at 680°C.

It should be noted, however, that the target upstream exhaust gas temperature and the target catalyst temperature are not limited to these values. When the specifications of the diesel engine 1 or the DPF 13 differ, the target upstream exhaust gas temperature and the target catalyst temperature take different values. For example, in certain cases, the target upstream exhaust gas temperature may be set at 550°C and the target catalyst temperature may be set at 600°C. In other cases, the target upstream exhaust gas temperature may be set at 600°C and the target catalyst temperature may be set at 650°C. In all cases, the target catalyst temperature should be higher than the target upstream exhaust gas temperature.

The controller 21 performs feedback control of the post-injection fuel injection timing and the post-injection fuel injection amount of the fuel injectors 9 such that the upstream exhaust gas temperature and the catalyst temperature coincide with the target upstream exhaust gas temperature and the target catalyst temperature, respectively.

For this purpose, the filter regeneration temperature control device further comprises a first temperature sensor 24 disposed in an inlet of the catalyst 14 to detect the upstream exhaust gas temperature, and a second temperature sensor 25 disposed in an outlet of the catalyst 14 to detect the catalyst temperature.

The location of the first temperature sensor 24 should not be limited to the inlet of the catalyst 14. It may be disposed in any location in the exhaust passage 10 between an exhaust port of the diesel engine 1 and the catalyst 14. Likewise, the location of the second temperature sensor 25 should not be limited to the outlet of the catalyst 14. For example, it is possible to detect the temperature of the DPF 13 and regards it as a temperature of the catalyst 14. Detection data from the first temperature sensor 24 and the second temperature sensor 25 are respectively input into the controller 21 via signal circuits.

When there is a change in the fuel injection characteristics of the fuel injectors 9 due to temporal degradation thereof or when an error occurs during crank angle detection due to temporal degradation of the crank angle sensor 22, the actual post-injection fuel injection timing may deviate from the basic post-injection fuel injection timing *ITPbase* or the actual post-injection fuel injection amount may deviate from the basic post-injection fuel injection amount *QPbase.*

When such temporal degradation occurs, the exhaust gas temperature in the exhaust passage 10 upstream of the catalyst 14, or in other words the upstream exhaust gas temperature, may deviate greatly from the target upstream exhaust gas temperature, or the catalyst temperature may deviate greatly from the target catalyst temperature. As a result, regeneration of the DPF 13 may fail. Further, when the actual post-injection fuel injection amount exceeds the basic post-injection fuel injection amount *QPbase,* the air-fuel ratio of the air-fuel mixture in the combustion chamber of the diesel engine 1 may become excessively rich, which adversely affects the fuel consumption of the diesel engine 1. Further, when the actual post-injection fuel injection timing is retarded from the basic post-injection fuel injection timing *ITPbase,* an oil dilution ratio may also be affected due to adhered fuel adhered to cylinder walls.

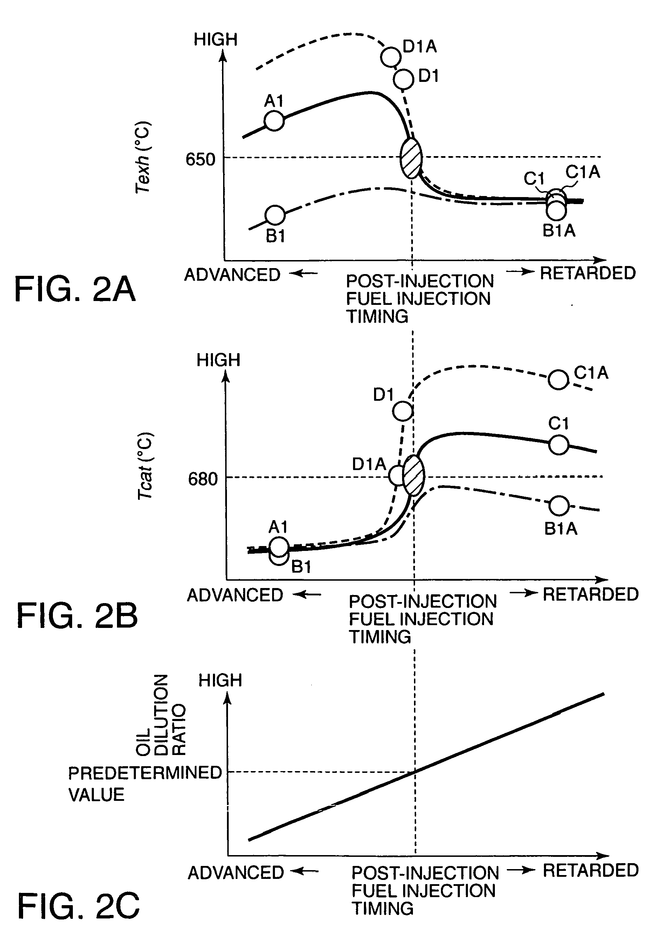

The inventors investigated experimentally variation in the upstream exhaust gas temperature, the catalyst temperature, and the oil dilution ratio when the post-injection fuel injection timing deviates from the basic post-injection fuel injection timing *ITPbase* and the post-injection fuel injection amount deviates from the basic post-injection fuel injection amount *QPbase,* while the engine load and the engine rotation speed are constant. The results are shown in FIGs. 2A-2C.

Lines in FIGs. 2A-2C show how the exhaust gas temperature, the catalyst temperature, and the oil dilution ratio vary when the post-injection fuel injection timing deviates from the basic post-injection fuel injection timing *ITPbase.* A solid line denotes a case where the post-injection fuel injection amount coincides with the basic post-injection fuel injection amount *QPbase.* A broken line denotes a case where the post-injection fuel injection amount is greater than the basic post-injection fuel injection amount *QPbase.* A dotted line denotes a case where the post-injection fuel injection amount is smaller than the basic post-injection fuel injection amount *QPbase.*

Referring to FIGs. 2A and 2B, the solid line, which represents the case where the post-injection fuel injection coincides with the basic post-injection fuel injection amount *QPbase,* shows that the upstream exhaust gas temperature *Texh* coincides with the target upstream exhaust gas temperature 650°C and the catalyst temperature *Tcat* coincides with the target catalyst temperature 680°C when the post-injection fuel injection timing coincides with the basic post-injection fuel injection timing *ITPbase.*

At a point A1 on the solid line where the post-injection fuel injection timing is advanced with respect to the basic post-injection fuel injection timing *ITPbase,* for example, the upstream exhaust gas temperature *Texh* is higher than the target upstream exhaust gas temperature 650°C and the catalyst temperature *Tcat* is lower than the target catalyst temperature 680°C. At the point Al, since the post-injection fuel injection timing is more advanced than the basic post-injection fuel injection timing *ITPbase,* the proportion of the post-injection fuel injection amount that burns in the combustion chamber increases, and therefore, the upstream exhaust gas temperature *Texh* becomes higher than the target upstream exhaust gas temperature 650°C. In contrast, the proportion of the post-injection fuel injection amount that does not burn in the combustion chamber but after-burns in the exhaust passage 10 decreases, and therefore, the catalyst temperature *Tcat* becomes lower than the target catalyst temperature 680°C.

Conversely, at a point C1 on the solid line where the post-injection fuel injection timing is retarded with respect to the basic post-injection fuel injection timing *ITPbase,* for example, the upstream exhaust gas temperature *Texh* is lower than the target upstream exhaust gas temperature 650°C and the catalyst temperature *Tcat* is higher than the target catalyst temperature 680°C. At the point Cl, since the post-injection fuel injection timing is more retarded than the basic post-injection fuel injection timing *ITPbase,* the proportion of the post-injection fuel injection amount that burns in the combustion chamber decreases, and therefore, the upstream exhaust gas temperature *Texh* becomes lower than the target upstream exhaust gas temperature 650°C. In contrast, the proportion of the post-injection fuel injection amount that does not burn in the combustion chamber but after-burns in the exhaust passage 10 increases, and therefore, the catalyst temperature *Tcat* becomes higher than the target catalyst temperature 680°C.

The broken line, which represents a case where the post-injection fuel injection amount is greater than the basic post-injection fuel injection amount *QPbase,* shows that the difference from the solid line depends on the post-injection fuel injection timing. Specifically, in a region where the post-injection fuel injection timing is advanced from the basic post-injection fuel injection timing *ITPbase,* the upstream exhaust gas temperature *Texh* is greatly affected by the post-injection fuel injection amount, as shown in FIG. 2A. In a region where the post-injection fuel injection timing is retarded from the basic post-injection fuel injection timing *ITPbase,* the catalyst temperature *Tcat* is greatly affected by the post-injection fuel injection amount, as shown in FIG. 2B.

In other words, with respect to the upstream exhaust gas temperature *Texh,* there is no significant difference between the solid line and the broken line in the region where the post-injection fuel injection timing is retarded from the basic post-injection fuel injection timing *ITPbase,* but in the region where the post-injection fuel injection timing is advanced from the basic post-injection fuel injection timing *ITPbase,* there is a significant difference between the broken line and the solid line. With respect to the catalyst temperature *Tcat,* there is no significant difference between the solid line and the broken line in the region where the post-injection fuel injection timing is advanced from the basic post-injection fuel injection timing *ITPbase,* but in the region where the post-injection fuel injection timing is retarded from the basic post-injection fuel injection timing *ITPbase,* there is a significant difference between the broken line and the solid line.

Accordingly, at a point D1A where the post-injection fuel injection timing is slightly advanced from the basic post-injection fuel injection timing *ITPbase,* the upstream exhaust gas temperature is apparently higher than the target upstream exhaust gas temperature 650°C while the catalyst temperature *Tcat* stays at the target catalyst temperature 680°C.

The dotted line, which represents a case where the post-injection fuel injection amount is smaller than the basic post-injection fuel injection amount *QPbase,* also shows that the difference from the solid line depends on the post-injection fuel injection timing. Specifically, in the region where the post-injection fuel injection timing is advanced from the basic post-injection fuel injection timing *ITPbase,* the upstream exhaust gas temperature *Texh* is greatly affected by the post-injection fuel injection amount, as shown in FIG. 2A. In the region where the post-injection fuel injection timing is retarded from the basic post-injection fuel injection timing *ITPbase,* the catalyst temperature *Tcat* is greatly affected by the post-injection fuel injection amount, as shown in FIG. 2B.

Accordingly, at a point B1 where the post-injection fuel injection timing is advanced from the basic post-injection fuel injection timing *ITPbase,* the upstream exhaust gas temperature *Texh* becomes lower than the target upstream exhaust gas temperature 650°C. At a point BIA where the post-injection fuel injection timing is retarded from the basic post-injection fuel injection timing *ITPbase,* the catalyst temperature *Tcat* becomes lower than the target upstream exhaust gas temperature 680°C.

As described above, in the region where the post-injection fuel injection timing is retarded from the basic post-injection fuel injection timing *ITPbase,* the difference between the post-injection fuel injection amount and the basic post-injection fuel injection amount *QPbase* scarcely affects the upstream exhaust gas temperature *Texh* while it greatly affects the catalyst temperature *Tcat.* In a region where the post-injection fuel injection timing is advanced from the basic post-injection fuel injection timing *ITPbase,* the difference between the post-injection fuel injection amount and the basic post-injection fuel injection amount *QPbase* greatly affects the upstream exhaust gas temperature *Texh* but scarcely affects the catalyst temperature *Tcat.*

Referring to FIG. 2C, the oil dilution ratio increases as the post-injection fuel injection timing is retarded irrespective of the difference between the post-injection fuel injection amount and the basic post-injection fuel injection amount *QPbase.* In other words, when the post-injecfion fuel injection timing is advanced from the basic post-injection fuel injection timing *ITPbase,* the oil dilution ratio is smaller than the predetermined value shown in the figure, and when the post-injection fuel injection timing is retarded from the basic post-injection fuel injection timing *ITPbase,* the oil dilution ratio is greater than the predetermined value.

Herein, oil dilution means a phenomenon whereby the fuel injected by the fuel injector 9 in the post-injection fuel injection collides with a cylinder wall to form a wall flow, and the wall flow invades a crank chamber through a gap between a piston ring and the cylinder wall and mixes with engine oil in the crank chamber.

As can be understood from FIG. 2C, the oil dilution ratio becomes smaller as the post-injection fuel injection timing advances. The reason is that the surface area of the cylinder wall facing the combustion chamber decreases as the piston approaches top dead center. When the post-injection fuel injection timing advances, it means that the post-injection fuel injection is performed at a crank angle nearer to top dead center of the piston where the surface area of the cylinder facing the combustion chamber is smallest. Accordingly, the amount of injected fuel forming a wall flow decreases as the post-injection fuel injection timing is advanced. On the contrary, as the post-injection fuel injection timing is retarded, the corresponding piston position becomes distant from top dead center and the surface area of the cylinder wall facing the combustion chamber increases. As a result, the oil dilution ratio increases as the post-injection fuel injection timing is retarded. An increase in the oil dilution ratio adversely affects the fuel consumption of the vehicle.

The filter regeneration temperature control device according to this invention takes advantage of the characteristics shown in FIGs. 2A-2C and performs feedback correction of the basic post-injection fuel injection timing *ITPbase* and/or the basic post-injection fuel injection amount *QPbase* on the basis of the upstream exhaust gas temperature *Texh* and the catalyst temperature *Tcat.* Even when there is a change in fuel injection characteristics of the fuel injectors 9 due to temporal degradation thereof or an error occurs during crank angle detection due to temporal degradation of a crank angle sensor 22, regeneration of the DPF 13 is performed under a favorable temperature condition by applying feedback correction to the basic post-injection fuel injection timing *ITPbase* and/or the basic post-injection fuel injection amount *QPbase* on the basis of the upstream exhaust gas temperature *Texh* and the catalyst temperature *Tcat.*

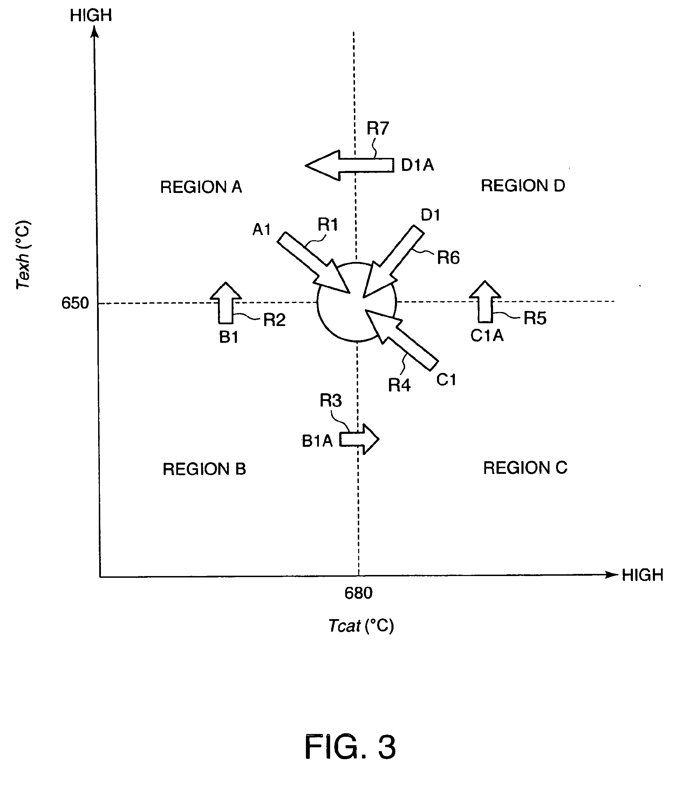

Next, referring to FIG. 3, DPF regeneration temperature control performed by the filter regeneration temperature control device will be described in detail.

FIG. 3 shows four temperature regions A-D divided according to the upstream exhaust gas temperature *Texh* and the catalyst temperature *Tcat.* FIG. 3 further shows the contents of correction of the post-injection fuel injection timing/amount in each temperature region performed by the filter regeneration temperature control device together with the results thereof. Arrows R1-R7 denote variation in the temperature condition. Arrows R1, R4, and R6 shows that feedback correction of the post-injection fuel injection timing/amount performed in the temperature regions A, C, and D causes the temperature condition to converge in a center target zone. Arrows R2, R3, R5, and R7 shows that feedback correction of the post-injection fuel injection timing/amount in the temperature regions B, C, and D causes the temperature condition to shift to an adjacent temperature region. Herein, the temperature condition is defined by the exhaust gas temperature *Texh* represented by the ordinate in the diagram shown in FIG. 3 and the catalyst temperature *Tcat* represented by the abscissa in the diagram.

The center target zone is defined by an upstream exhaust gas temperature of 650°C and a catalyst temperature of 680°C.

In FIG. 3, the four temperature regions A-D are divided as follows:

Region A: temperature region in which the upstream exhaust gas temperature *Texh* is higher than the target upstream exhaust gas temperature 650°C and the catalyst temperature *Tcat* is lower that the target catalyst temperature 680°C.

Region B: temperature region in which the upstream exhaust gas temperature *Texh* is lower than the target upstream exhaust gas temperature 650°C and the catalyst temperature *Tcat* is lower than the target catalyst temperature 680°C.

Region C: temperature region in which the upstream exhaust gas temperature *Texh* is lower than the target upstream exhaust gas temperature 650°C and the catalyst temperature *Tcat* is higher than the target catalyst temperature 680°C.

Region D: temperature region in which the upstream exhaust gas temperature *Texh* is higher than the target upstream exhaust gas temperature 650°C and the catalyst temperature *Tcat* is higher than the target catalyst temperature 680°C.

In FIGs. 2A and 2B, the point A1 belongs to the region A. The point B1 and the point B1A belong to the region B. The point C1 and the point C1A belong to the region C. The point D1 and the point D1A belong to the region D.

When a post-injection fuel injection is performed to regenerate the DPF 13, the controller 21 determines the region A-D to which the current temperature condition belongs on the basis of the upstream exhaust gas temperature *Texh* detected by the first temperature sensor 24 and the catalyst temperature *Tcat* detected by the second temperature sensor 25. Further, the basic post-injection fuel injection amount *QPbase* and the basic post-injection fuel injection timing *ITPbase* are corrected according to the determined region. Correction of the post-injection fuel injection timing/amount performed in the respective regions A-D will now be described.

### (1) Region A

In the region A, as the point A in FIGs. 2A and 2B shows, the post-injection fuel injection amount coincides with the basic post-injection fuel injection amount *QPbase,* but the post-injection fuel injection timing is advanced with respect to the basic post-injection fuel injection timing *ITPbase.* In the region A, the basic post-injection fuel injection timing *ITPbase* is retard-corrected. By repeatedly performing this retard-correction, the temperature condition shifts towards the center target zone as shown by the arrow R1 in FIG. 3. Another case where the post-injection fuel injection amount is greater than the basic post-injection fuel injection amount *QPbase* and the post-injection fuel injection timing is advanced with respect to the basic post-injection fuel injection timing *ITPbase* also belongs to the region A. In this case also, the the basic post-injection fuel injection timing *ITPbase* is retard-corrected. By repeatedly performing this retard-correction, the temperature condition shifts towards the region D. In the region D, the basic post-injection fuel injection amount *QPbase* is decrease-corrected as described later.

Referring again to FIGs. 2A and 2B, when the basic post-injection fuel injection timing *ITPbase* is retard-corrected at the point A1, the upstream exhaust gas temperature *Texh* and the catalyst temperature *Tcat* shift respectively in the right hand direction of the figures along the solid line curve such that the upstream exhaust gas temperature *Texh* descends to the target upstream exhaust gas temperature 650°C and the catalyst temperature *Tcat* ascends to the target catalyst temperature 680°C. Thus, the temperature condition converges in the hatched region in FIGs. 2A and 2B.

### (2) Region B

In the region B, the following two situations can exist. Specifically, as the point B1 in FIGs. 2A and 2B shows, the post-injection fuel injection amount is smaller than the basic post-injection fuel injection amount *QPbase* and the post-injection fuel injection timing is advanced with respect to the basic post-injection fuel injection timing *ITPbase.* Alternatively, as the point B1A in FIGs. 2A and 2B shows, the post-injection fuel injection amount is smaller than the basic post-injection fuel injection amount *QPbase* and the post-injection fuel injection timing is retarded with respect to the basic post-injection fuel injection timing *ITPbase.* In the region B, the basic post-injection fuel injection amount *QPbase* is increase-corrected. By repeatedly performing this increase-correction, the temperature condition shifts to the region A or the region B as shown by the arrow R2 or R3 in FIG. 3.

Referring again to FIGs. 2A and 2B, when the basic post-injection fuel injection amount *QPbase* is increase-corrected at the point B1, the upstream exhaust gas temperature *Texh* ascends beyond the target upstream exhaust gas temperature 650°C towards the point A1. When the basic post-injection fuel injection amount *QPbase* is increase-corrected at the point BIA, the catalyst temperature *Tcat* ascends beyond the target catalyst temperature 680°C towards the point C1.

### (3) Region C

In the region C, the following two situations can exist. Specifically, as the point C1 in FIGs. 2A and 2B shows, the post-injection fuel injection amount coincides with the basic post-injection fuel injection amount *QPbase* and the post-injection fuel injection timing is retarded with respect to the basic post-injection fuel injection timing *ITPbase.* Alternatively, as the point CIA in FIGS. 2A and 2B shows, the post-injection fuel injection amount is greater than the basic post-injection fuel injection amount *QPbase* and the post-injection fuel injection timing is retarded with respect to the basic post-injection fuel injection timing *ITPbase.* In the region C, the basic post-injection fuel injection timing *ITPbase* is advance-corrected. By repeatedly performing this advance-correction, the temperature condition shifts towards the center target zone as shown by the arrow R4 in FIG. 3.

Referring again to FIGs. 2A and 2B, when the basic post-injection fuel injection timing *ITPbase* is advance-corrected at the point C1, the upstream exhaust gas temperature *Texh* and the catalyst temperature *Tcat* shift respectively in the left hand direction of the figures along the solid line curve such that the temperature condition reaches the hatched region. On the other hand, when the same process is applied to the temperature condition represented by the point C1A in FIGs. 2A and 2B, the temperature condition shifts to the region D as shown by the arrow R5 in FIG. 3.

Referring again to FIGs. 2A and 2B, when the basic post-injection fuel injection timing *ITPbase* is advance-corrected at the point C1A, the upstream exhaust gas temperature *Texh* ascends along the broken line curve. By repeatedly performing this advance-correction, the temperature condition shifts to the region D, in which the upstream exhaust gas temperature *Texh* exceeds the target upstream exhaust gas temperature 650°C and the catalyst temperature *Tcat* reaches the vicinity of the point D1, which is higher than the target catalyst temperature 680°C.

### (4) Region D

In the region D, as the point D1 and the point D1A in FIGs. 2A and 2B show, the post-injection fuel injection amount is greater than the basic post-injection fuel injection amount *QPbase* and the post-injection fuel injection timing is slightly advanced with respect to the basic post-injection fuel injection timing *ITPbase.* However, at the point D1, the upstream exhaust gas temperature *Tcat* is higher than the target upstream exhaust gas temperature 650°C and the catalyst temperature *Texh* is higher than the target catalyst temperature. At the point D1A, the upstream exhaust gas temperature *Tcat* is higher than the target upstream exhaust gas temperature 650°C and the catalyst temperature *Texh* approximately coincides with the target catalyst temperature 680°C. In the region D, the basic post-injection fuel injection amount *QPbase* is decrease-corrected. By repeatedly performing this decrease-correction, the temperature condition represented by the point D1 shifts towards the center target zone as shown by the arrow R6 in FIG. 3.

Referring again to FIGs. 2A and 2B, when the basic post-injection fuel injection amount *QPbase* is decrease-corrected at the point D1, the upstream exhaust gas temperature *Texh* descends towards the target upstream exhaust gas temperature 650°C and the catalyst temperature *Tcat* descends towards the target catalyst temperature 680°C. Thus, the temperature condition converges in the hatched region in FIGs. 2A and 2B.

On the other hand, by repeatedly performing the above process, the temperature condition represented by the point D1A in FIGs. 2A and 2B shifts to the region A as shown by the arrow R7 in FIG. 3.

Referring again to FIGs. 2A and 2B, when the basic post-injection fuel injection amount *QPbase* is decrease-corrected at the point D1A, the upstream exhaust gas temperature *Texh* descends towards the target upstream exhaust gas temperature 650°C. On the other hand, the catalyst temperature *Tcat,* which coincides with the target catalyst temperature 680°C prior to correction, falls below the target catalyst temperature 680°C when the basic post-injection fuel injection amount *QPbase* is decrease-corrected. As a result, the temperature condition represented by the point D1A shifts to the region A.

As described above, the temperature condition shifts as indicated by the arrows R1-R7 in FIG. 3 when the post-injection fuel injection timing/ amount are corrected according to the temperature regions A - D during regeneration of the DPF 13. A shift represented by the arrows R1, R4, and R6 denotes that the temperature condition converges in the center target zone in FIG. 3. By maintaining the post-injection fuel injection amount and the post-injection fuel injection timing after correction, the temperature condition is thereafter kept in the center target zone in FIG. 3.

On the other hand, a shift shown by the arrows R2, R3, R5, and R7 denotes a shift to another temperature region such that the temperature condition does not converge in the center target zone in FIG. 3. In this case, the filter regeneration temperature control device further performs the following processing.

1) When the temperature condition has shifted to the region A following the arrow R2, the correction for the region A is applied to cause the temperature condition to converge in the center target zone as shown by the arrow R1 in FIG. 3.

2) When the temperature condition has shifted to the region C following the arrow R3, the correction for the region C is applied to cause the temperature condition to converge in the center target zone as shown by the arrow R4 in FIG. 3. However, as a result of the correction for the region C, the temperature condition may shift to the region D as shown by the arrow R5 in FIG. 3. In this case, the following processing 3) is performed.

3) When the temperature condition has shifted to the region D following the arrow R5, the correction for the region D is applied to cause the temperature condition to converge in the center target zone as shown by the arrow R6 in FIG. 3. However, as a result of the correction for the region D, the temperature condition may shift to the region A as shown by the arrow R7 in FIG. 3. In this case, the following processing 4) is performed.

4) When the temperature condition has shifted to the region A following the arrow R7, the correction for the region A is applied to cause the temperature condition to converge in the center target zone as shown by the arrow R1 in FIG. 3.

As described above, even when errors occur in the post-injection fuel injection timing or the post-injection amount due to temporal degradation of the fuel injectors 9 or the crank angle sensor 23 when the DPF 13 is regenerated, the controller 21 first determines the temperature region A-D, and repeatedly performs correction of the post-injection fuel injection timing or the post-injection fuel injection amount according to the determined region A-D, thereby controlling the upstream exhaust gas temperature *Texh* to the target upstream exhaust gas temperature 650°C and the catalyst temperature *Tcat* to the target catalyst temperature 680°C, respectively.

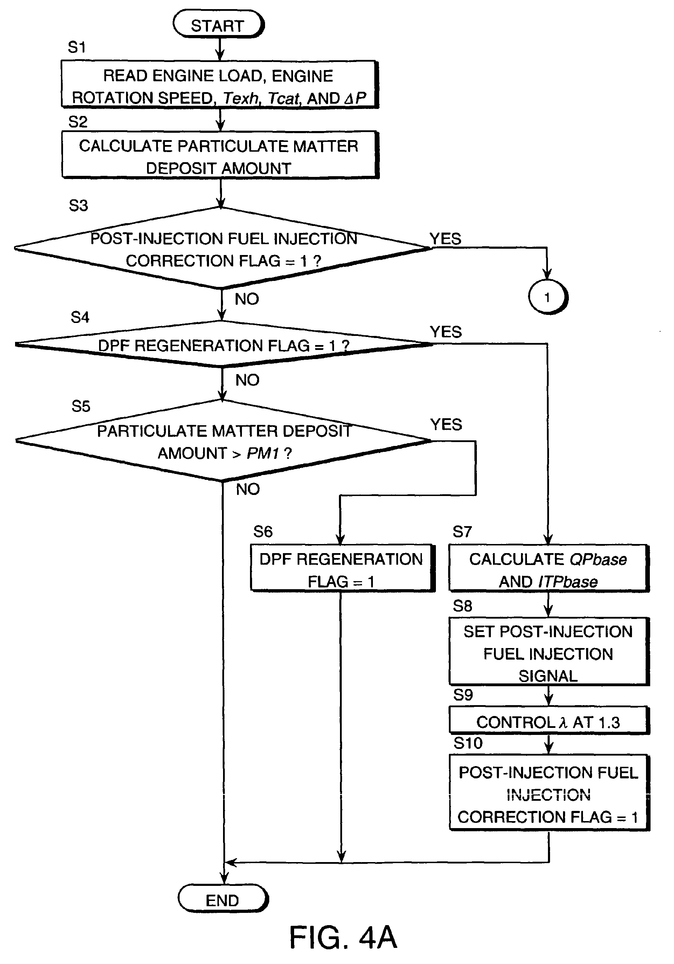

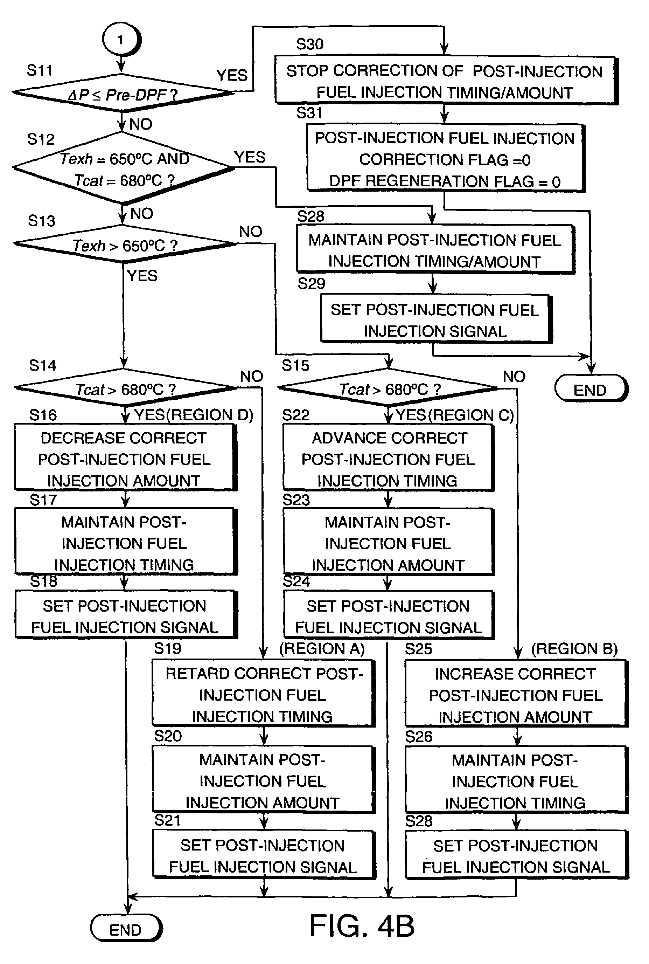

To realize this control, the controller 21 is programmed to perform a filter regeneration routine shown in FIGs. 4A and 4B. This routine is performed repeatedly in synchronization with the rotation of the diesel engine 1. Since the fuel injector 9 is installed in every cylinder, the routine is performed at a timing corresponding to top dead center of the piston in each cylinder and correction of the post-injection fuel injection timing/amount is performed for each fuel injector 9.

Since the timing of the post-injection fuel injection is different from the timing of the routine execution, corrected values are stored in the RAM and the controller 21 controls the fuel injector 9 to perform a post-injection fuel injection of a corrected post-injection fuel injection amount by executing a different routine. Since the timing of the post-injection fuel injection is different from the timing of the routine execution, the execution timing of the filter regeneration routine is not limited to the above.

It is possible to perform the routine at fixed time intervals. It is also possible to perform the routine only once in every rotation of the diesel engine 1 and apply the corrected values for all the fuel injectors 9 instead of performing the routine individually for each fuel injector 9.

Referring to FIGs. 4A and 4B, in a step S1, the controller 21 reads the engine load detected by the accelerator pedal depression sensor 22, the engine rotation speed detected by the crank angle sensor 23, the upstream exhaust gas temperature *Texh* detected by the first temperature sensor 24, the catalyst temperature *Tcat* detected by the second temperature sensor 25, and the differential pressure ΔP between the upstream and downstream sides of the DPF 13 detected by the differential pressure sensor 26.

In a step S2, the controller 21 calculates a particulate matter deposit amount of the DPF 13. The particulate matter deposit amount can be calculated from the differential pressure ΔP and an exhaust gas flow rate in the DPF 13. Alternatively, it can be calculated by accumulating a particulate matter deposit amount per unit time according to operation conditions of the diesel engine 1. These methods of calculating the particulate matter deposit amount are known by JP 2004-197722A, published from the Japan Patent Office in 2004, the contents of which are herein incorporated by reference.

In a step S3, the controller 21 determines if a post-injection fuel injection correction flag is at unity. The post-injection fuel injection correction flag takes a value of zero or unity and its initial value is zero. When the post-injection fuel injection correction flag is not at unity, the controller 21 proceeds to the processing of a step S4. When the post-injection fuel injection correction flag is at unity, the controller 21 proceeds to the processing of a step S11.

In the step S4, the controller 21 determines if a DPF regeneration flag is at unity. The DPF regeneration flag takes a value of zero or unity and its initial value is zero. When the DPF regeneration flag is not at unity, the controller 21 proceeds to the processing of a step S5. When the DPF regeneration flag is at unity, the controller 21 proceeds to the processing of a step S7.

In the step S5, the controller 21 determines if the particulate matter deposit amount has exceeded a predetermined value *PM1.* When the particulate matter deposit amount has not exceeded the predetermined value *PM1,* the controller 21 terminates the filter regeneration routine. When the particulate matter deposit amount has exceeded the predetermined value *PM1,* the controller 21 sets the DPF regeneration flag at unity in a step S6 and terminates the filter regeneration routine.

In this way, when the particulate matter deposit amount is in excess of the predetermined value *PM1* during an operation of the diesel engine 1, the DPF regeneration flag is first set at unity in the step S6. On the next occasion of routine execution, the determination in the step S4 shifts to be affirmative and the controller 21 proceeds to the processing of the step S7 onward.

In the step S7, the controller 21 determines the basic post-injection fuel injection amount *QPbase* and the basic post-injection fuel injection timing *ITPbase* from the engine rotation speed and the engine load by referring to maps which are stored in the ROM in advance and have characteristics shown in FIGs. 5 and 6.

Referring to FIG. 5, the basic post-injection fuel injection amount *QPbase* is a variable corresponding to the engine load and the engine rotation speed. The reason for this is to maintain the upstream exhaust gas temperature *Texh* at the target upstream exhaust gas temperature 650°C and the catalyst temperature *Tcat* at the target catalyst temperature 680°C irrespective of variations in the engine load and the engine rotation speed. In this map, when the engine rotation speed is constant, the basic post-injection fuel injection amount *QPbase* increases as the engine load decreases. The reason for this is that a larger post-injection fuel injection amount is required to raise the upstream exhaust gas temperature *Texh* or the catalyst temperature *Tcat* under a small engine load.

Referring to FIG. 6, when the engine rotation speed is constant, the basic post-injection fuel injection timing *ITPbase* is set to advance as the engine load decreases. The reason for this is to maintain a high temperature in the combustion chamber under a small engine load, at which the temperature in the combustion chamber tends to decrease, by advancing the basic post-injection fuel injection timing *ITPbase* to increase the ignition quality of the air-fuel mixture in the combustion chamber.

In a following step S8, the controller 21 sets a post-injection fuel injection signal to be output to the fuel injector 9 such that the fuel injector 9 injects fuel corresponding to the basic post-injection fuel injection amount *QPbase* at a timing corresponding to the basic post-injection fuel injection timing *ITPbase.* The post-injection fuel injection signal is set as a pulse width modulation signal. As described above, the execution timing of the filter regeneration routine and the post-injection fuel injection timing by the fuel injector 9 are different, and therefore the post-injection fuel injection signal is output to the fuel injector 9 at a timing corresponding to the basic post-injection fuel injection timing *ITPbase* by executing the different routine by the controller 21 or another controller.

In a step S9, the controller 21 controls an oxygen concentration in the exhaust gas not to exceed a predetermined concentration. When the particulate matter deposited in the DPF 13 burns rapidly, the catalyst temperature *Tcat* rises rapidly and may cause heat damage to the DPF 13. To avoid such rapid burning of the particulate matter, it is necessary to control the oxygen concentration in the exhaust gas not to exceed the predetermined concentration. Specifically, the controller 21 throttles the intake throttle 5 to decrease the intake air flow rate so as to maintain the excess air factor λ at approximately 1.3.

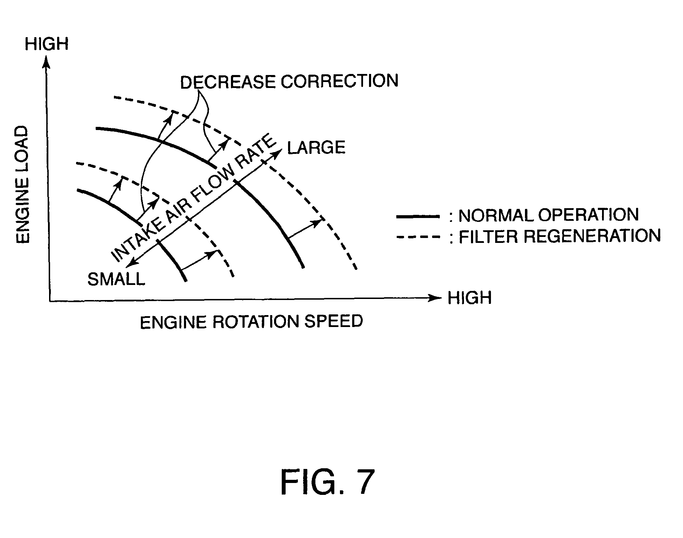

Referring to FIG. 7, the intake air flow rate is defined in advance as shown by the solid line according to the engine load and the engine rotation speed such that a predetermined engine output torque is obtained when regeneration of the DPF 13 is not performed. The two solid lines in the figure denote a target intake air flow rate. The right solid line gives a greater value than the left solid line. Although only two solid lines are presented in the figure, numerous lines are defined between the two solid lines when these characteristics are stored in a form of a map. When regeneration of the DPF 13 is performed, the solid lines shift to the positions depicted by the broken lines in the figure. As a result, the target intake air flow rate is decrease corrected with respect to an identical engine load and an identical engine rotation speed during regeneration of the DPF 13. A map having the contents described above is stored in the ROM of the controller 21 in advance.

When regeneration of the DPF 13 is performed, the controller 21 refers to this map to throttle the intake throttle 5 so as to maintain the excess air factor λ of the exhaust gas at approximately 1.3.

In a following step S10, the controller 21 sets the post-injection fuel injection correction flag at unity and terminates the filter regeneration routine.

On the next occasion of routine execution, therefore, the determination in the step S3 shifts to be affirmative and the controller 21 performs the processing of the step S 11 onward.

In the step S11, the controller 21 determines if the differential pressure ΔP between the upstream and downstream sides of the DPF 13 is equal to or smaller than a regeneration termination determination value *Pre-DPF.* The regeneration termination determination value *Pre-DPF* is a value which increases as the exhaust gas flow rate increases, and is defined in a map stored in the ROM in advance. The exhaust gas flow rate can be calculated using the engine load and the engine rotation speed as parameters. By referring to the map from the exhaust gas flow rate thus calculated, the regeneration termination determination value *Pre-DPF* can be determined. Since setting of the regeneration termination determination value *Pre-DPF* is not a subject matter of this invention, detail description thereof is herein omitted.

When the differential pressure ΔP is equal to or smaller than the regeneration termination determination value *Pre-DPF* in the step S11, it means that regeneration of the DPF 13 is complete. In this case, the controller 21 determines in a step S30 to stop correction of the post-injection fuel injection timing and the post-injection fuel injection amount and stop the post-injection fuel injection itself. In a following step S31, the controller 21 resets both the post-injection fuel injection correction flag and the DPF regeneration flag to zero and then terminates the routine.

The determination as to whether or not regeneration of the DPF 13 is complete can be made in a different way. For example, it is possible to accumulate an elapsed time from the start of regeneration of the DPF 13 and determine that regeneration is complete when the accumulated time reaches a predetermined time.

At the beginning of regeneration of the DPF 13, the differential pressure ΔP between the upstream and downstream sides of the DPF 13 is greater than the regeneration termination determination value *Pre-DPF.* In this case, the controller 21 determines in a step S12 if the upstream exhaust gas temperature *Texh* coincides with the target upstream exhaust gas temperature 650°C and the catalyst temperature *Tcat* coincides with the target catalyst temperature 680°C.

If there is no temporal degradation in the fuel injectors 9 or the crank angle sensor 23, the target upstream exhaust gas temperature 650°C and the target catalyst temperature 680°C should be achieved by controlling the fuel injectors 9 to inject fuel corresponding to the basic post-injection fuel injection amount *QPbase* at the basic post-injection fuel injection timing *ITPbase.* When on the other hand, the post-injection fuel injection timing deviates from the basic post-injection fuel injection timing *ITPbase* or the post-injection fuel injection amount deviates from the basic post-injection fuel injection amount *QPbase* due to temporal degradation of the fuel injector 9 or the crank angle sensor 23, the exhaust gas temperature *Texh* deviates from the target upstream exhaust gas temperature 650°C or the catalyst temperature *Tcat* deviates from the target catalyst temperature 680°C.

In other words, if the upstream exhaust gas temperature *Texh* deviates from the target upstream exhaust gas temperature 650°C or the catalyst temperature *Tcat* deviates from the target catalyst temperature 680°C while the fuel injectors 9 inject fuel corresponding to the basic post-injection fuel injection amount *QPbase* at a timing corresponding to the basic post-injection fuel injection timing *ITPbase,* it can be concluded that the fuel injectors 9 or the crank angle sensor 23 has suffered temporal degradation.

When the determination in the step S12 is affirmative, the upstream exhaust gas temperature *Texh* and the catalyst temperature *Tcat* are maintained at their respective target values, and hence, correction of the post-injection fuel injection timing or the post-injection fuel injection amount is not necessary. In this case, the controller 21 determines in a step S28 to maintain the current values of the post-injection fuel injection timing and the post-injection fuel injection amount, and sets the post-injection fuel injection signal accordingly in the step S29. The post-injection fuel injection signal set in this way is output to the corresponding fuel injector 9 at a set timing by executing the different routine.

When the determination in the step S12 is negative, the controller 21 determines in a step S13 if the upstream exhaust gas temperature *Texh* is higher than the target upstream exhaust gas temperature 650°C. When the upstream exhaust gas temperature *Texh* is higher than the target upstream exhaust gas temperature 650°C, the controller 21 determines in a step S14 if the catalyst temperature *Tcat* is higher than the target catalyst temperature 680°C. When the upstream exhaust gas temperature *Texh* is not higher than the target upstream exhaust gas temperature 650°C, the controller 21 determines in a step S15 if the catalyst temperature *Tcat* is higher than the target catalyst temperature 680°C.

When the determination in the step S 14 is affirmative, it means that the temperature condition defined by the upstream exhaust gas temperature *Texh* and the catalyst temperature *Tcat* corresponds to the region D. When the determination in the step S14 is negative, the temperature condition corresponds to the region A. When the determination in the step S15 is affirmative, the temperature condition corresponds to the region C. When the determination in the step S15 is negative, the temperature condition corresponds to the region B.

When the determination in the step S14 is affirmative, or in other words when the temperature condition corresponds to the region D, the controller 21 performs the processing of steps S16-S18.

First, in the step S16, the controller 21 applies decrease-correction to the post-injection fuel injection amount. The object to be corrected is the post-injection fuel injection amount calculated on the immediately preceding occasion when the routine was performed. The initial value of the post-injection fuel injection amount is the basic post-injection fuel injection amount *QPbase.* When the processing of the step S 16 is performed repeatedly during regeneration of the DPF 13, the post-injection fuel injection amount that was decrease corrected in the step S16 on the last occasion when the routine was performed is further decrease corrected on the present occasion. Thus, the post-injection fuel injection amount is decreased by a predetermined amount every time the processing of the step S16 is performed.

In the step S17, the controller 21 sets the post-injection fuel injection timing equal to the post-injection fuel injection timing that was set on the last occasion when the routine was performed. In other words, the controller 21 maintains the value of the post-injection fuel injection timing without correcting it.

In the step S18, the controller 21 sets a post-injection fuel injection signal corresponding to the post-injection fuel injection amount calculated in the step S 16. The post-injection fuel injection signal set in this way is output to the fuel injector 9 at a timing corresponding to the post-injection fuel injection timing set in the step S17 by executing the different routine. After performing the processing of the step S18, the controller 21 terminates the routine.

When the determination in the step S14 is negative, or in other words when the temperature condition corresponds to the region A, the controller 21 performs the processing of steps S19-S21.

In the step S19, the controller 21 applies retard-correction to the post-injection fuel injection timing. The object to be corrected is the post-injection fuel injection timing calculated on the immediately preceding occasion when the routine was performed. The initial value of the post-injection fuel injection timing is the basic post-injection fuel injection timing *ITPbase.* When the processing of the step S 19 is performed repeatedly during regeneration of the DPF 13, the post-injection fuel injection timing that was retard corrected in the step S19 on the last occasion when the routine was performed is further retard corrected on the present occasion. Thus, the post-injection fuel injection timing is retarded by a predetermined crank angle every time the processing of the step S19 is performed.

In the step S20, the controller 21 sets the post-injection fuel injection amount equal to the post-injection fuel injection amount that was set on the last occasion when the routine was performed. In other words, the controller 21 maintains the value of the post-injection fuel injection amount without correcting it.

In the step S21, the controller 21 sets a post-injection fuel injection signal corresponding to the post-injection fuel injection amount calculated in the step S20. The post-injection fuel injection signal set in this way is output at a timing corresponding to the post-injection fuel injection timing calculated in the step S19 to the fuel injector 9 by executing the different routine. After performing the processing of the step S21, the controller 21 terminates the routine.

When the determination in the step S15 is affirmative, or in other words when the temperature condition corresponds to the region C, the controller 21 performs the processing of steps S22-S24.

In the step S22, the controller 21 applies advance-correction to the post-injection fuel injection timing. The object to be corrected is the post-injection fuel injection timing calculated on the immediately preceding occasion when the routine was performed. The initial value of the post-injection fuel injection timing is the basic post-injection fuel injection timing *ITPbase.* When the processing of the step S22 is performed repeatedly during regeneration of the DPF 13, the post-injection fuel injection timing that was advance-corrected in the step S22 on the last occasion when the routine was performed is further advance-corrected on the present occasion. Thus, the post-injection fuel injection timing is advanced by a predetermined crank angle every time the processing of the step S22 is performed.

In the step S23, the controller 21 sets the post-injection fuel injection amount equal to the post-injection fuel injection amount that was set on the last occasion when the routine was performed. In other words, the controller 21 maintains the value of the post-injection fuel injection amount without correcting it.

In the step S24, the controller 21 sets a post-injection fuel injection signal corresponding to the post-injection fuel injection amount set in the step S23. The post-injection fuel injection signal set in this way is output at a timing corresponding to the post-injection fuel injection timing calculated in the step S22 to the fuel injector 9 by executing the different routine. After performing the processing of the step S24, the controller 21 terminates the routine.

When the determination in the step S15 is negative, or in other words the temperature condition corresponds to the region B, the controller 21 performs the processing of steps S25-S27.

In the step S25, the controller 21 applies increase-correction to the post-injection fuel injection amount. The object to be corrected is the post-injection fuel injection amount calculated on the immediately preceding occasion when the routine was performed. The initial value of the post-injection fuel injection amount is the basic post-injection fuel injection amount *QPbase.* When the processing of the step S25 is performed repeatedly during regeneration of the DPF 13, the post-injection fuel injection amount that was increase corrected in the step S25 on the last occasion when the routine was performed is further increase-corrected on the present occasion. Thus, the post-injection fuel injection amount is increased by a predetermined amount every time the processing of the step S25 is performed.

In the step S26, the controller 21 sets the post-injection fuel injection timing to the post-injection fuel injection timing that was set on the last occasion when the routine was performed. In other words, the controller 21 maintains the value of the post-injection fuel injection timing without correcting it.

In the step S27, the controller 21 sets a post-injection fuel injection signal corresponding to the post-injection fuel injection amount set in the step S25. The post-injection fuel injection signal set in this way is output at a timing corresponding to the post-injection fuel injection timing set in the step S26 to the fuel injector 9 by executing the different routine. After performing the processing of the step S27, the controller 21 terminates the routine.

An increment used in increase-correction of the post-injection fuel injection amount in the step S16, a decrement used in decrease-correction of the post-injection fuel injection amount in the step S25, a retard-correction amount used in retard-correction of the post-injection fuel injection timing in the step S19, and an advance-correction amount used in advance-correction of the post-injection fuel injection timing in the step S22 can be set variedly. For example, they can be set at large values which require only one single post-injection fuel injection to cause the temperature condition to coincide with the target temperature condition or shift to another temperature region, or at small values which requires several post-injection fuel injections until the temperature condition converges with the target temperature condition or shifts to another temperature region. What is important here is to realize the target temperature condition in an early period after the start of regeneration of the DPF 13.

The increment, the decrement, the retard-correction amount, and the advance-correction amount described above may be set at fixed values or as variables determined on the basis of the difference between the upstream exhaust gas temperature *Texh* and the target upstream exhaust gas temperature and the difference between the catalyst temperature *Tcat* and the target catalyst temperature as parameters.

As described above, the filter regeneration temperature control device according to this invention corrects the post-injection fuel injection amount or the post-injection fuel injection timing for regeneration of the DPF 13 on the basis of the upstream exhaust gas temperature *Texh* and the catalyst temperature *Tcat.* Accordingly, the temperature of the catalyst 14 and the upstream exhaust gas temperature upstream of the catalyst 14 can be controlled to optimum temperatures for regeneration of the DPF 13 even when the fuel injectors 9 or the crank angle sensor 23 suffer temporal degradation.

The contents of Tokugan 2007-302828 with a filing date of November 22, 2007 in Japan and Tokugan 2008-264214 with a filing date of October 10 in Japan, are hereby incorporated by reference.

Although the invention has been described above with reference to certain embodiments, the invention is not limited to the embodiments described above. Modifications and variations of the embodiments described above will occur to those skilled in the art, within the scope of the claims.

For example, application of the filter regeneration temperature control device according to this invention is not limited to a multi-cylinder diesel engine for a vehicle. It can be applied to any internal combustion engine comprising a filter which traps particulate matter in exhaust gas, and a catalyst which promotes oxidation of unburnt fuel or carbon monoxide contained in exhaust gas on the upstream side of the filter.

The embodiments of this invention in which an exclusive property or privilege is claimed are defined as follows:

## Claims

1. A filter regeneration temperature control device for an internal combustion engine (1), the engine (1) comprising a fuel injector (9), an exhaust passage (10), a filter (13) which traps particulate matter in exhaust gas in the exhaust passage (10), and a catalyst (14) which promotes oxidation of unburnt fuel or carbon monoxide in the exhaust gas in the exhaust passage (10) on an upstream side of the filter (13), the device comprising:
a sensor (24) which detects an upstream exhaust gas temperature (*Texh*) in the exhaust passage (10) upstream of the catalyst (14);
a sensor (25) which detects any one of a downstream exhaust gas temperature in the exhaust passage (10) downstream of the catalyst (14) and a temperature of the filter (13), as a catalyst temperature (*Tcat*) of the catalyst (14); and
a programmable controller (21) programmed to:
determine if regeneration of the filter (13) is required (S5, S6);
determine a post-injection fuel injection timing and a post-injection fuel injection amount on the basis of the upstream exhaust gas temperature (*Texh*) and the catalyst temperature (*Tcat*) when regeneration of the filter (13) is required (S16, S17, S19, S20, S22, S23, S25, S26, S28); and
control the fuel injector (9) to perform a post-injection fuel injection corresponding to the post-injection fuel injection timing and the post-injection fuel injection amount (S18, S21, S24, S27, S29).

2. The filter regeneration temperature control device as defined in Claim 1, wherein the controller (21) is further programmed to:
control the fuel injector (9), when regeneration of the filter (13) is required, to perform a post-injection fuel injection on the basis of a basic post-injection fuel injection timing (*ITPbase*) and a basic post-injection fuel injection amount (*QPbase*) (S8); and
determine the fuel injection timing and the fuel injection amount by applying correction to the basic post-injection fuel injection timing (*ITPbase*) and the basic post-injection fuel injection amount (*QPbase*) on the basis of the upstream exhaust gas temperature (*Texh*) and the catalyst temperature (*Tcat*) detected after an immediately preceding post-injection fuel injection (S13-S27).

3. The filter regeneration temperature control device as defined in Claim 2, further comprising a sensor (23) which detects an engine rotation speed of the internal combustion engine (1) and a sensor (24) which detects an engine load of the internal combustion engine (1), wherein the controller (21) is further programmed to set the basic post-injection fuel injection timing (*ITPbase*) to a more advanced value and the basic post-injection fuel injection amount (*QPbase*) to a larger value as the engine load decreases and the engine rotation speed decreases (S7).

4. The filter regeneration temperature control device as defined in Claim 2 or Claim 3, wherein the controller (21) is further programmed to:
compare the upstream exhaust gas temperature (*Texh*) with a predetermined target upstream exhaust gas temperature;
apply retard-correction to the basic post-injection fuel injection timing (*ITPbase*) or decrease-correction to the basic post-injection fuel injection amount (*QPbase*) (S16, S19) to determine the post-injection fuel injection timing and the post-injection fuel injection amount, when the upstream exhaust gas temperature (*Texh*) is higher than the target upstream exhaust gas temperature; and
apply advance-correction to the basic post-injection fuel injection timing (*ITPbase*) or increase-correction to the basic post-injection fuel injection amount (*QPbase*) (S22, S25) to determine the post-injection fuel injection timing and the post-injection fuel injection amount, when the upstream exhaust gas temperature (*Texh*) is lower than the target upstream exhaust gas temperature.

5. The filter regeneration temperature control device as defined in any one of Claim 2 through Claim 4, wherein the controller (21) is further programmed to:
compare the catalyst temperature (*Tcat*) with a predetermined target catalyst temperature (S14);
apply advance-correction to the basic post-injection fuel injection timing (*ITPbase*) or decrease-correction to the basic post-injection fuel injection amount (*QPbase*) to determine the post-injection fuel injection timing and the post-injection fuel injection amount, when the catalyst temperature (*Tcat*) is higher than the target catalyst temperature (S16, S22); and
apply retard-correction to the basic post-injection fuel injection timing (*ITPbase*) or increase-correction to the basic post-injection fuel injection amount (*QPbase*) to determine the post-injection fuel injection timing and the post-injection fuel injection amount, when the catalyst temperature (*Tcat*) is lower than the target catalyst temperature (S19, S25).

6. The filter regeneration temperature control device as defined in Claim 2, wherein the controller (21) is further programmed to:
apply retard-correction to the basic post-injection fuel injection timing (*ITPbase*) (S19) while not applying correction to the basic post-injection fuel injection amount (*QPbase*) (S20) to determine the post-injection fuel injection timing and the post-injection fuel injection amount in a first region in which the upstream exhaust gas temperature (*Texh*) is higher than a predetermined target upstream exhaust gas temperature and the catalyst temperature (*Tcat*) is lower than a predetermined target catalyst temperature;
apply increase-correction to the basic post-injection fuel injection amount (*QPbase*) (S25) while not applying correction to the basic post-injection fuel injection timing (*ITPbase*) (S26) to determine the post-injection fuel injection timing and the post-injection fuel injection amount in a second region in which the upstream exhaust gas temperature (*Texh*) is lower than the target upstream exhaust gas temperature and the catalyst temperature (*Tcat*) is lower than a predetermined target catalyst temperature;
apply advance-correction to the basic post-injection fuel injection timing (*ITPbase*) (S22) while not applying correction to the basic post-injection fuel injection amount (*QPbase*) (S23) to determine the post-injection fuel injection timing and the post-injection fuel injection amount in a third region in which the upstream exhaust gas temperature (*Texh*) is lower than the target upstream exhaust gas temperature and the catalyst temperature (*Tcat*) is higher than the target catalyst temperature; and
apply decrease-correction to the basic post-injection fuel injection amount (*QPbase*) (S16) while not applying correction to the basic post-injection fuel injection timing (*ITPbase*) to determine the post-injection fuel injection timing and the post-injection fuel injection amount in a fourth region in which the upstream exhaust gas temperature (*Texh*) is higher than the target upstream exhaust gas temperature and the catalyst temperature (*Tcat*) is higher than the target catalyst temperature.

7. The filter regeneration temperature control device as defined in any one of Claim 1 through Claim 6, wherein the controller (21) is further programmed to:
determine if regeneration of the filter (13) is complete (S11); and
control the fuel injector (9) to stop the post-injection fuel injection (S30), when regeneration of the filter (13) is complete.

8. The filter regeneration temperature control device as defined in any one of Claim 1 through Claim 7, wherein the catalyst (14) comprises an oxidation catalyst or a three-way catalyst.

9. A filter regeneration temperature control method for an internal combustion engine (1), the engine (1) comprising a fuel injector (9), an exhaust passage (10), a filter (13) which traps particulate matter in exhaust gas in the exhaust passage (10), and a catalyst (14) which promotes oxidation of unburnt fuel or carbon monoxide in the exhaust gas in the exhaust passage (10) on an upstream side of the filter (13), the method comprising:
detecting an upstream exhaust gas temperature (*Texh*) in the exhaust passage (10) upstream of the catalyst (14);
detecting any one of a downstream exhaust gas temperature in the exhaust passage (10) downstream of the catalyst (14) and a temperature of the filter (13), as a catalyst temperature (*Tcat*) of the catalyst (14);
determining if regeneration of the filter (13) is required (S5, S6);
determining a post-injection fuel injection timing and a post-injection fuel injection amount on the basis of the upstream exhaust gas temperature (*Texh*) and the catalyst temperature (*Tcat*) when regeneration of the filter (13) is required (S16, S17, S19, S20, S22, S23, S25, S26, S28); and
controlling the fuel injector (9) to perform a post-injection fuel injection corresponding to the post-injection fuel injection timing and the post-injection fuel injection amount (S18, S21, S24, S27, S29).
